# EUROPÄISCHE PATENTSCHRIFT

(11) **EP 3 616 247 B1**
(45) Veröffentlichungstag und Bekanntmachung des Hinweises auf die Patenterteilung: **14.07.2021**
(21) Anmeldenummer: 18718758.8
(22) Anmeldetag: 10.04.2018
(51) Int. Cl.: B60K 1/04, H01M 50/20

(54) **AKKUMULATORANORDNUNG**
BATTERY ASSEMBLY
ENSEMBLE ACCUMULATEUR

(30) Priorität: 26.04.2017 DE 102017206988
(43) Veröffentlichungstag der Anmeldung: 04.03.2020
(73) Patentinhaber: MAHLE International GmbH, 70376 Stuttgart (DE)
(72) Erfinder: HIRSCH, Stefan, 70180 Stuttgart (DE); MOSER, Michael, 73479 Ellwangen (DE); SCHROTH, Holger, 75433 Maulbronn (DE); WALLISCH, Mario, 72631 Aichtal (DE)
(74) Vertreter: BRP Renaud & Partner mbB Rechtsanwälte Patentanwälte Steuerberater
(86) Internationale Anmeldenummer: PCT/EP2018/059147
(87) Internationale Veröffentlichungsnummer: WO 2018/197202

(56) Entgegenhaltungen:
- EP-A1- 2 871 123
- WO-A1-2010/136863
- DE-A1-102012 000 622

## Beschreibung

Die vorliegende Erfindung betrifft eine Akkumulatoranordnung, insbesondere für ein Kraftfahrzeug, mit einem ein erstes Gehäuseteil und ein zweites Gehäuseteil aufweisenden Akkumulatorgehäuse, das einen Aufnahmeraum zur Aufnahme von mindestens einem Batteriemodul aufweist, gemäß dem Oberbegriff des Anspruchs 1.

Bei heutigen elektrisch betriebenen Kraftfahrzeugen kommen zur Speicherung von elektrischer Energie sogenannte Traktionsbatterien zum Einsatz. Die Traktionsbatterien sind oftmals aus mehreren miteinander elektrisch verschalteten Batteriemodulen gebildet, die in einem dafür vorgesehenen bevorzugt abgedichteten Akkumulatorgehäuse angeordnet sind. Diese Akkumulatorgehäuse dienen zum Schutz der Elektronik vor äußeren Einflüssen und bestehen in der Regel aus einer Gehäuseoberschale und einer Gehäuseunterschale. Allgemein besitzen derartige Akkumulatorgehäuse eine hohe Anforderung insbesondere an Dichtigkeit, aufgrund der zum Teil sehr hohen Spannungen der einzelnen Batteriemodule. Ein Austausch solcher Batteriemodule stellt derweil einen hohen Montageaufwand dar, da in aller Regel die Batteriemodule an sich zusammen mit dem Akkumulatorgehäuse ausgebaut werden müssen, um besagtes Akkumulatorgehäuse überhaupt öffnen zu können.

Aus EP 2 871 123 A1 ist eine Batterie mit zwei Batteriemodulen bekannt, die in einem Batteriekasten angeordnet sind. Der Batteriekasten ist dabei in zwei Teile unterteilt und die Batteriemodule sind in dem Batteriekasten aufgenommen. In WO 2010/136863 A1, DE 10 2012 000 622 A1 und US 5 501 289 A sind weitere Batterien offenbart, die jeweils einen Batteriekasten und mehrere in diesem aufgenommene Batteriemodule umfassen. Aus der DE 10 2012 012 891 A1 ist eine Vorrichtung zur Verbindung von zumindest zwei in zumindest einer Reihe angeordneten Batteriemodulen in einem Batteriekasten eines Fahrzeugs, welche Batteriemodule unter Zwischenlage einer Verbindungsplatte aneinandergrenzen, allgemein bekannt. Die Verbindungsplatte weist hierzu an einer Modulseite Zentrierelemente auf, die in korrespondierenden Zentrieröffnungen der beiden aneinandergrenzenden Batteriemodule einragen. Ferner ist insbesondere an der gegenüberliegenden Modulseite ein funktionell von der Verbindungsplatte entkoppeltes Verbindungselement vorgesehen, das die beiden aneinandergrenzenden Batteriemodule an der gegenüberliegenden Modulseite miteinander verbindet. Der Batteriekasten, gebildet aus einer Oberschale und einer Unterschale, taucht dabei in einen Mitteltunnel eines Fahrzeugkarosseriebodens ein.

Nachteilig am derzeitigen Stand der Technik ist es einerseits, dass beispielsweise zur Wartung einzelner Batteriemodule in der Regel die gesamte Traktionsbatterie, das heißt, das gesamte Akkumulatorgehäuse, inklusive der darin angeordneten Batteriemodule, demontiert werden muss. Da die Traktionsbatterien verhältnismäßig groß und sehr schwer sind, ist der Aufwand für die Montage und die Demontage extrem aufwendig und zudem kostenintensiv. Andererseits sind die gängigen Akkumulatorgehäuse überhaupt nicht oder nur stark begrenzt zur Steigerung einer Strukturfestigkeit der Fahrzeugkarosserie als solches von Nutzen. Bekannte Bauweisen verwenden ein separates Batteriegehäuse das aufgrund von Transportvorschriften selbst eine gewisse Festigkeit aufweisen muss. Die Festigkeitseigenschaft des Batteriegehäuses wird bei der Montage mit der Festigkeit der Fahrzeugkarosserie kombiniert. Dies erfordert einen hohen Abstimmungsaufwand zwischen den beiden Gewerken und führt zu überhöhten Anforderungen für separate Batteriegehäuse. Ferner sind die benötigten Festigkeitsanforderungen an das Batteriegehäuse für eine Nutzung der Batterie nach dem Lebenszyklus im Fahrzeug beispielsweise als Pufferspeicher überhöht und unnötig.

Die vorliegende Erfindung beschäftigt sich daher mit der Aufgabe, für eine Akkumulatoranordnung der eingangs genannten Art eine verbesserte oder zumindest alternative Ausführungsform anzugeben, die insbesondere die vorstehend beschriebenen Nachteile zumindest teilweise überwindet und zudem durch eine vereinfachte Fertigung kostengünstig herstellbar ist.

Diese Aufgabe wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Akkumulatoranordnung, mit einem ein ersten Gehäuseteil und ein zweites Gehäuseteil aufweisenden Akkumulatorgehäuse, zumindest einen Querträger in einem Aufnahmeraum des Akkumulatorgehäuses anzuordnen, um eine Strukturfestigkeit einer Fahrzeugkarosserie zu erhöhen. Im Wesentlichen ist das Akkumulatorgehäuse durch die Ausgestaltung mit dem ersten Gehäuseteil und dem zweiten Gehäuseteil in Z-Richtung teilbar bzw. zerlegbar ausgebildet. Diese Ausgestaltung ermöglicht eine vereinfachte Montage und Demontage des mindestens einen vorgesehenen Batteriemoduls. Entlang einer Längsachse des Querträgers, zum Beispiel in Y-Richtung des Kraftfahrzeuges, ist durch Anordnung des zumindest einen Querträgers eine erhöhte Torsionssteifigkeit zu erzielen. Zudem kann die Biegesteifigkeit beispielsweise um eine Kraftfahrzeuglängsachse, also um die X-Achse des Kraftfahrzeuges, durch die Anordnung des Querträgers erhöht werden. Die Akkumulatoranordnung weist hierzu das aus dem ersten Gehäuseteil und dem zweiten Gehäuseteil gebildete Akkumulatorgehäuse auf, das einen derartigen Aufnahmeraum zur Aufnahme von dem mindestens einem Batteriemodul begrenzt. Der zumindest eine am Akkumulatorgehäuse angeordnete Querträger unterteilt den Aufnahmeraum zumindest teilweise in einen ersten Bereich und einen zweiten Bereich. Es ist vorgesehen, dass mindestens ein derartiges Batteriemodul in dem ersten Bereich oder in dem zweiten Bereich im Aufnahmeraum angeordnet ist. Es sei gesagt, dass eine beliebige Anzahl an Querträgern im Aufnahmeraum des Akkumulatorgehäuses zum Einsatz kommen kann, wodurch eine beliebige Anzahl an zumindest teilweise unterteilten Bereichen gebildet werden kann.

In einer vorteilhaften Ausführungsform der erfindungsgemäßen Idee ist der zumindest eine Querträger teilweise integral am ersten Gehäuseteil und/oder integral am zweiten Gehäuseteil ausgebildet. Der zumindest eine Querträger ist somit als ein Teil des gesamten Akkumulatorgehäuses zu verstehen. Die integrale Ausgestaltung der Querträgerstruktur ist aus fertigungstechnischer und kostentechnischer Sicht von Vorteil.

Eine vorteilhafte Weiterbildung sieht vor, dass der Querträger mindestens einen Absatz aufweist, an dem sich das mindestens eine Batteriemodul abstützt. Der Absatz am Querträger erstreckt sich bevorzugt in Y-Richtung des Kraftfahrzeuges, so dass ein zum Absatz korrespondierend ausgeformtes Batteriemodul bevorzugt ein im Bereich des Absatzes ausgebildete Verdickung aufweist, die sich am Absatz abstützt. Die in Kraftfahrzeug-Y-Richtung ausgebildete Verdickung am Batteriemodul kann somit zwischen dem in Kraftfahrzeug-Z-Richtung teilbaren Akkumulatorgehäuse eingeklemmt werden, wodurch sich das Batteriemodul fixieren lässt.

In einer zweckmäßigen Ausführungsform ist der Absatz an einer dem ersten Gehäuseteil oder an einer dem zweiten Gehäuseteil zugewandten Seite ausgebildet und das zumindest eine Batteriemodul zwischen dem ersten Gehäuseteil und/oder dem zweiten Gehäuseteil und dem Querträger verklemmt. Das heißt, dass der Absatz es ermöglicht das mindestens eine Batteriemodul zwischen dem ersten Gehäuseteil und dem zweiten Gehäuseteil einzuklemmen, so dass ein Kraftschluss in Z-Richtung und ein bevorzugt toleranzbehafteter Formschluss in mindestens der X-Richtung entstehen.

Die erfindungsgemäße Ausführungsform sieht vor, dass der Querträger im Bereich der Verbindungsstelle zwischen dem ersten Gehäuseteil und dem zweiten Gehäuseteil eine Positioniereinrichtung aufweist. Die Positioniereinrichtung dient in erster Linie zu einem vereinfachten und geführten Verbinden des ersten Gehäuseteils mit dem zweiten Gehäuseteil des Akkumulatorgehäuses. Ferner dient die Positioniereinrichtung zur teilweisen Fixierung der beiden Gehäuseteile zueinander in Kraftfahrzeug-X-Richtung und in Kraftfahrzeug-Y-Richtung.

In einer vorteilhaften Ausführungsform ist der Querträger aus einem ersten Querträgerteil und einem zweiten Querträgerteil gebildet, wobei das erste Querträgerteil am ersten Gehäuseteil und das zweite Querträgerteil am zweiten Gehäuseteil ausgebildet sind. Das erste Querträgerteil und/oder das zweite Querträgerteil können jeweils integral am ersten Gehäuseteil bzw. am zweiten Gehäuseteil ausgebildet sein. Besonders bevorzugt ist der zuvor beschriebene Absatz im Bereich der Verbindung der beiden Querträgerteile angeordnet. Ferner ist die Positioniereinrichtung bevorzugt als Verbindungsglied zwischen dem jeweiligen ersten Querträgerteil und dem jeweiligen zweiten Querträgerteil eines derartigen Querträgers angeordnet.

Die erfindungsgemäße Ausführungsform sieht vor, dass die Positioniereinrichtung als Verzahnung ausgebildet ist, wobei der Querträger zumindest einseitig Zahnelemente aufweist, die in dazu korrespondierende Aufnahmeelemente am ersten Gehäuseteil oder am zweiten Gehäuseteil eingreifen. Mit Hilfe der Positioniereinrichtung ist eine Fixierung des ersten Gehäuseteils mit dem zweiten Gehäuseteil sowohl in Kraftfahrzeug-X-Richtung als auch in Kraftfahrzeug-Y-Richtung gegeben.

In einer zweckmäßigen Ausführungsform sind das erste Gehäuseteil und das zweite Gehäuseteil mittels einer Haltevorrichtung im Bereich des zumindest einen Querträgers miteinander fixiert. Eine Fixierung der beiden Gehäuseteile im Bereich des zumindest einen Querträgers mittels einer Haltevorrichtung erhöht die Struktursteifigkeit des gesamten Akkumulatorgehäuses.

In einer vorteilhaften Ausführungsform ist die Haltevorrichtung als eine Schraubverbindung ausgebildet. Hierbei weist zweckmäßig beispielsweise entweder das erste Gehäuseteil oder das zweite Gehäuseteil ein Gewinde auf, das komplementär zu einer Schraube ausgebildet ist, die die beiden Gehäuseteile miteinander verschraubt.

In einer vorteilhaften Ausführungsvariante der erfindungsgemäßen Idee durchdringt die Schraube der Schraubverbindung den Querträger in Z-Richtung zumindest teilweise. Die Fixierung der beiden Gehäuseteile des Akkumulatorgehäuses im Bereich des zumindest einen Querträgers stellt eine bauraumoptimierte Lösung dar.

Eine vorteilhafte Weiterbildung der Erfindung sieht vor, dass der zumindest eine Querträger an seinen jeweiligen Längsenden mittels eines C-förmigen Profils im Montagezustand beidseitig mit jeweiligen Längsträgern des Kraftfahrzeuges in Verbindung steht. Durch die beidseitige Anordnung der C-förmigen Profile können einerseits Torsions- und Biegekräfte an den jeweiligen Längsträgern übertragen werden und andererseits können fertigungsbedingte Längenunterschiede der Querträger über die C-förmigen Profile kompensiert bzw. angeglichen werden.

In einer zweckmäßigen Ausführungsform sind die C-förmigen Profile aus einem Material mit einer niedrigeren Festigkeit hergestellt als der zumindest eine Querträger. Durch die vorteilhafte Auswahl an unterschiedlichen Werkstoffen mit unterschiedlichen Festigkeitseigenschaften lässt sich eine seitliche Aufprallenergie vorteilhaft kompensieren. Dadurch, dass die C-förmigen Profile eine niedrigere Festigkeit aufweisen als die Querträger, verformen sich die C-förmigen Profile bei einer Krafteinwirkung in Kraftfahrzeug-Y-Richtung eher als die Querträger, wodurch die Batteriemodule geschützt werden.

Eine vorteilhafte Ausführungsform sieht vor, dass das erste Gehäuseteil und/oder das zweite Gehäuseteil mittels eines Dichtstoffes abgedichtet sind. Das Akkumulatorgehäuse sowie der mindestens eine an diesem Akkumulatorgehäuse angeordnete Querträger können aus mehreren Einzelteilen, die zum Teil beispielsweise nur punktuell miteinander verschweißt sind, bestehen. Der Anforderung nach einem dichten Akkumulatorgehäuse entsprechend, ist eine Abdichtung des ersten Gehäuseteils und/oder des zweiten Gehäuseteils mittels eines Dichtstoffes vorgesehen. Beispielsweise können das erste Gehäuseteil und/oder das zweite Gehäuseteil mit einem Kleber beaufschlagt bzw. besprüht werden.

Zweckmäßig ist zwischen dem ersten Gehäuseteil und dem zweiten Gehäuseteil eine Dichtkontur vorgesehen. Die Abdichtung dient im Wesentlichen dem Schutz der Elektronik im Bereich des Aufnahmeraums. Die Anordnung einer umlaufenden Ringdichtung stellt eine kostengünstige und effektive Abdichtung der zu schützenden Elektronik dar.

In einer vorteilhaften Ausführungsform umfasst die Dichtkontur eine doppelte Dichtungslinie und ist als eine geschlossene umlaufende Ringdichtung ausgebildet. Die Ausgestaltung der doppelten Dichtungslinie hat den Vorteil, dass die Dichtheit zwischen dem ersten Gehäuseteil und dem zweiten Gehäuseteil durch eine Prüfung des Raumes zwischen den beiden Dichtlinien festgestellt werden kann.

Ein erfindungsgemäßes Kraftfahrzeug weist eine derartige zuvor beschriebene Akkumulatoranordnung auf. Dabei kann ein Kraftfahrzeugunterfahrschutz einteilig bzw. monolithisch mit entweder dem ersten Gehäuseteil oder dem zweiten Gehäuseteil des Akkumulatorgehäuses ausgebildet sein. Somit stellt der Kraftfahrzeugunterfahrschutz gleichzeitig die Gehäuseunterschale des Akkumulatorgehäuses dar, so dass gänzlich auf eine sonst übliche zusätzliche separate Schutzabdeckung verzichtet werden kann. Alternativ oder zusätzlich kann entweder das erste Gehäuseteil oder das zweite Gehäuseteil mit einem Fahrzeugunterboden des Kraftfahrzeugs einteilig bzw. monolithisch ausgebildet sein. Somit stellt der Fahrzeugunterboden des Kraftfahrzeugs gleichzeitig die Gehäuseoberschale dar, so dass auf ein sonst übliches zusätzliches separates Teil verzichtet werden kann.

Vorteilhafterweise kann auch vorgesehen sein, dass das mindestens eine Batteriemodul unmittelbar an dem ersten Gehäuseteil oder an dem zweiten Gehäuseteil lösbar festgelegt ist. "Unmittelbar festgelegt" bedeutet in diesem Zusammenhang, dass das mindestens eine Batteriemodul in dem einen Gehäuseteil ohne das andere Gehäuseteil festlegbar und von diesem lösbar ist. Das mindestens eine Batteriemodul kann an dem ersten Gehäuseteil oder an dem zweiten Gehäuseteil beispielsweise klemmend oder formschlüssig oder durch eine andere lösbare Verbindung festgelegt sein. Somit können mehrere Batteriemodule direkt an dem Fahrzeugunterboden oder an dem ersten an dem Fahrzeugunterboden festgelegten Gehäuseteil einzeln festgelegt und von diesem gelöst werden. Ist beispielweise das erste Gehäuseteil an dem Fahrzeugunterboden montiert, so ist das an dem ersten Gehäuseteil festgelegte Batteriemodul für eine Wartung ohne eine Demontage des ersten Gehäuseteils von dem Fahrzeugunterboden erreichbar und von diesem lösbar. Auf diese vorteilhafte Weise kann die Wartung und die Demontage des mindestens einen Batteriemoduls in der Akkumulatoranordnung vereinfacht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Schutzumfang der beigefügte Ansprüche zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Schnittdarstellung einer erfindungsgemäßen Akkumulatoranordnung mit einem ein erstes Gehäuseteil und ein zweites Gehäuseteil aufweisenden Akkumulatorgehäuse,
- Fig. 2: die Darstellung der Fig. 1 mit einem in ein vom Akkumulatorgehäuse begrenzenden Aufnahmeraum eingesetzten Batteriemodul,
- Fig. 3: die Darstellung aus Fig. 2, wobei das zweite Gehäuseteil in Kraftfahrzeug-Z-Richtung vom ersten Gehäuseteil beabstandet dargestellt ist,
- Fig. 4: eine isometrische Detaildarstellung der Akkumulatoranordnung im Bereich eines Querträgers,
- Fig. 5: die Darstellung aus Fig. 2, wobei das erste Gehäuseteil und das zweite Gehäuseteil durch eine Haltevorrichtung miteinander fixiert sind,
- Fig. 6: eine Prinzipdarstellung des erfindungsgemäßen Querträgers im Montagezustand mit beidseitig angeordneten C-förmigen Profilen, die jeweils an Längsträgern eines Kraftfahrzeuges angeordnet sind,
- Fig. 7: die Darstellung aus Fig. 6 im verformten Zustand nach einer Krafteinwirkung in Kraftfahrzeug-Y-Richtung.

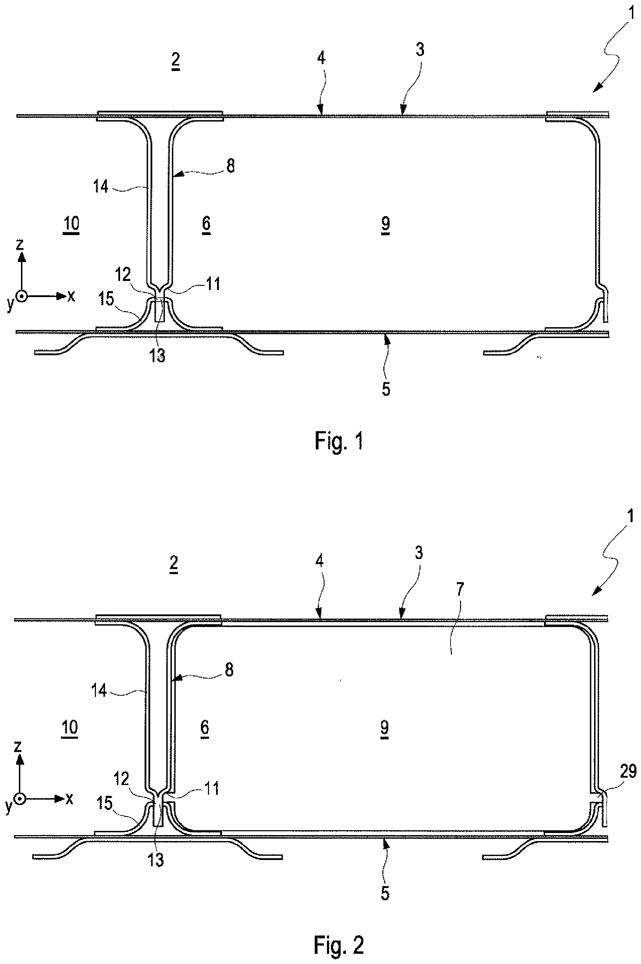

Die Fig. 1 zeigt eine Schnittdarstellung einer erfindungsgemäßen Akkumulatoranordnung 1 mit einem ein erstes Gehäuseteil 4 und ein zweites Gehäuseteil 5 aufweisenden Akkumulatorgehäuse 3. Die Akkumulatoranordnung 1 ist insbesondere für ein nicht näher dargestelltes Kraftfahrzeug 2 vorgesehen. Das Akkumulatorgehäuse 3 umschließt bzw. begrenzt einen Aufnahmeraum 6, der zur Aufnahme von mindestens einem hier nicht gezeigten Batteriemodul 7 ausgebildet ist. Am Akkumulatorgehäuse 3 ist ein Querträger 8 angeordnet, der den Aufnahmeraum 6 in einen ersten Bereich 9 und einen zweiten Bereich 10 unterteilt. Die Akkumulatoranordnung 1 kann eine beliebige Anzahl an Querträgern 8 und somit eine beliebige Anzahl an durch die jeweiligen Querträger 8 abgegrenzte Bereiche 9, 10 aufweisen. Die jeweiligen Bereiche 9, 10 weisen bevorzugt in einem montierten Zustand des Akkumulatorgehäuses 3 im Querschnitt eine geschlossene Kontur auf. Die Kontur der jeweiligen Bereiche 9, 10 kann bevorzugt die Form eines Rechteckes mit abgerundeten Ecken aufweisen. Durch die zuvor beschriebene vorteilhafte Ausgestaltung der Kontur der jeweiligen Bereiche 9, 10 kann eine erhöhte Torsionssteifigkeit entlang einer Kraftfahrzeug-Y-Achse ermöglicht werden. Der mindestens eine Querträger 8 kann eine I-förmige Gestalt aufweisen, wodurch eine hohe Biegesteifigkeit um die Kraftfahrzeug-X-Achse ermöglicht werden kann. Außerdem kann der Querträger 8 teilweise integral am ersten Gehäuseteil 4 und/oder teilweise integral am zweiten Gehäuseteil 5 ausgebildet sein. Es sei gesagt, dass sowohl der oder die Querträger 8 als auch die Kontur der jeweiligen Bereiche 9, 10 alle denkbaren Formen aufweisen können. Entscheidend ist lediglich, dass durch Anordnung des mindestens einen Querträgers 8 am Akkumulatorgehäuse 3 der Aufnahmeraum 6 mindestens in zwei oder mehr Bereiche 9, 10 unterteilt ist.

Die Fig. 2 zeigt die Darstellung der Fig. 1 mit einem in den Aufnahmeraum 6 des Akkumulatorgehäuses 3 eingesetzten Batteriemodul 7. Wie bereits zuvor beschrieben ist der Aufnahmeraum 6 durch die Anordnung des Querträgers 8 in den ersten Bereich 9 und den zweiten Bereich 10 unterteilt. Der Darstellung ist zu entnehmen, dass das Batteriemodul 7 im ersten Bereich 9 eingesetzt ist. Der zweite Bereich 10 ist dagegen frei bzw. nicht mit einem derartigen Batteriemodul 7 bestückt. Das mindestens eine Batteriemodul 7 kann aus einer Ansammlung von Li-Ionen-Zellen gebildet sein. Der mindestens eine Querträger 8 kann bevorzugt besonders schmal ausgeführt sein, so dass in Kraftfahrzeug-X-Richtung benachbarte Batteriemodule 7 einen möglichst kleinen Abstand zueinander haben. Diese Ausgestaltung kann eine möglichst optimale Bauraumausnutzung der Akkumulatoranordnung 1 in Bezug auf eine Mehrzahl an Batteriemodule 7 ermöglichen. Ferner kann die I-förmige Bauweise des Querträgers 8 Durchbrüche in Kraftfahrzeug-X-Richtung mit nur geringem Biegesteifigkeitsverlust ermöglichen. Ein derartiges Batteriemodul 7 ist im Montagezustand von dem ersten Gehäuseteil 4 und dem zweiten Gehäuseteil 5 in Kraftfahrzeug-Z-Richtung begrenzt. In Kraftfahrzeug-X-Richtung grenzt ein derartiges Batteriemodul 7 mindestens einseitig oder gar beidseitig an einen derartigen Querträger 8.

Ferner kann der mindestens eine Querträger 8 einen Absatz 11 aufweisen, an dem sich das mindestens eine Batteriemodul 7 abstützen bzw. verklemmen kann. Der Absatz 11 kann im Bereich einer Verbindungstelle 12 in Kraftfahrzeug-Z-Richtung zwischen dem ersten Gehäuseteil 4 und dem zweiten Gehäuseteil 5 angeordnet sein.

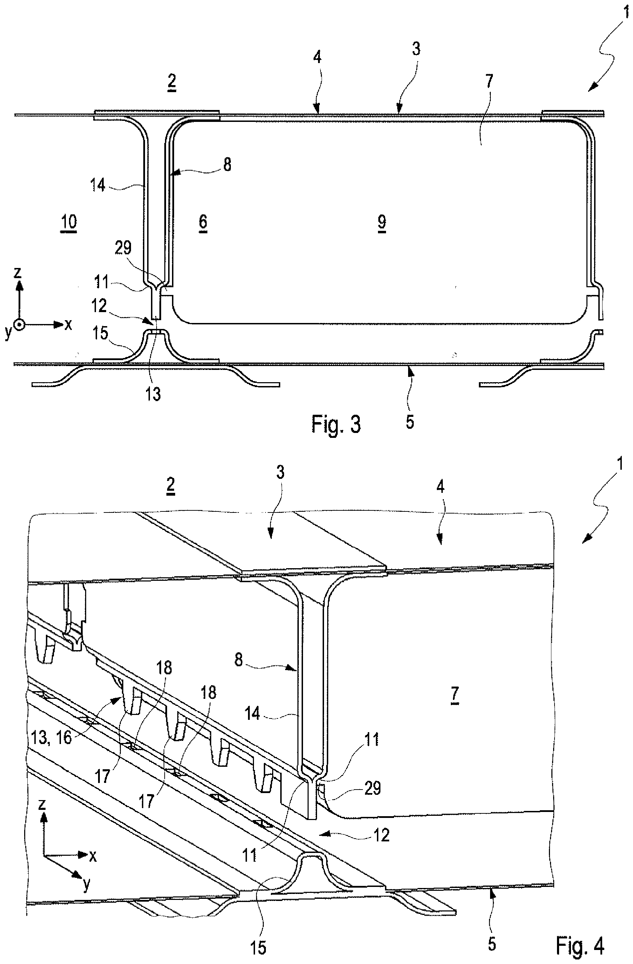

Die Fig. 3 zeigt die Darstellung aus Fig. 2, wobei das zweite Gehäuseteil 5 in Kraftfahrzeug-Z-Richtung vom ersten Gehäuseteil 4 beabstandet bzw. gelöst dargestellt ist. Das Akkumulatorgehäuse 3 kann zweckmäßig so ausgestaltet sein, dass dieses horizontal, also in Kraftfahrzeug-Z-Richtung, teilbar ist, so dass das mindestens eine Batteriemodul 7 im Inneren des Akkumulatorgehäuses 3 montiert und demontiert werden kann. Der Absatz 11 kann an einer dem ersten Gehäuseteil 4 oder an einer dem zweiten Gehäuseteil 5 zugewandten Seite ausgebildet sein. Das mindestens eine Batteriemodul 7 kann im Bereich des Absatzes 11 zwischen dem ersten Gehäuseteil 4 und/oder dem zweiten Gehäuseteil 5 und dem Querträger 8 verklemmt sein. Hierzu kann das Batteriemodul 7 beispielsweise eine wulstartige Verdickung 29 aufweisen, die sich in den Bereich des Absatzes 11 hineinerstreckt. Die wulstartige Verdickung 29 des Batteriemoduls 7 kann im Bereich der Verbindungsstelle 12 in Kraftfahrzeug-Z-Richtung zwischen dem ersten Gehäuseteil 4 und dem zweiten Gehäuseteil 5 verklemmt sein.

Außerdem kann der Querträger 8 im Bereich der Verbindungsstelle 12 zwischen dem ersten Gehäuseteil 4 und dem zweiten Gehäuseteil 5 eine Positioniereinrichtung 13 aufweisen. Hierbei kann der Querträger 8 aus einem ersten Querträgerteil 14 und einem zweiten Querträgerteil 15 gebildet sein. Das erste Querträgerteil 14 kann beispielsweise am ersten Gehäuseteil 4 angeordnet sein, wohingegen das zweite Querträgerteil 15 am zweiten Gehäuseteil 5 angeordnet sein kann. Das erste Querträgerteil 14 und das zweite Querträgerteil 15 können jeweils integral am ersten Gehäuseteil 4 oder am zweiten Gehäuseteil 5 ausgeformt sein.

Die Fig. 4 zeigt eine isometrische Detaildarstellung der Akkumulatoranordnung 1 im Bereich des Querträgers 8. Insbesondere zeigt die Detaildarstellung den Bereich der Verbindungsstelle 12 zwischen dem ersten Gehäuseteil 4 und dem zweiten Gehäuseteil 5 bzw. die Verbindungsstelle 12 zwischen dem ersten Querträgerteil 14 und dem zweiten Querträgerteil 15 bzw. die Verbindungsstelle 12 zwischen dem Querträger 8 als solches und dem ersten Gehäuseteil 4 oder dem zweiten Gehäuseteil 5. Im Weiteren wird der Einfachheit halber von einer Ausgestaltung der Akkumulatoranordnung 1 ausgegangen, bei der der Querträger 8 integral am ersten Gehäuseteil 4 angeordnet ist und die Verbindungsstelle 12 zur Komplettierung des Akkumulatorgehäuses 3 zwischen dem Querträger 8 und dem zweiten Gehäuseteil 5 liegt. In besagtem Bereich der Verbindungsstelle 12 ist die Positioniereinrichtung 13 angeordnet. Die Positioniereinrichtung 13 ist als Verzahnung 16 ausgebildet, wobei der Querträger 8 mindestens ein Zahnelement 17 aufweist, das in mindestens ein dazu korrespondierendes Aufnahmeelement 18 am zweiten Gehäuseteil 5 eingreift.

Die Verzahnung 16 weist mehrere Zahnelemente 17 sowie mehrere dazu korrespondierende Aufnahmeelemente 18 auf.

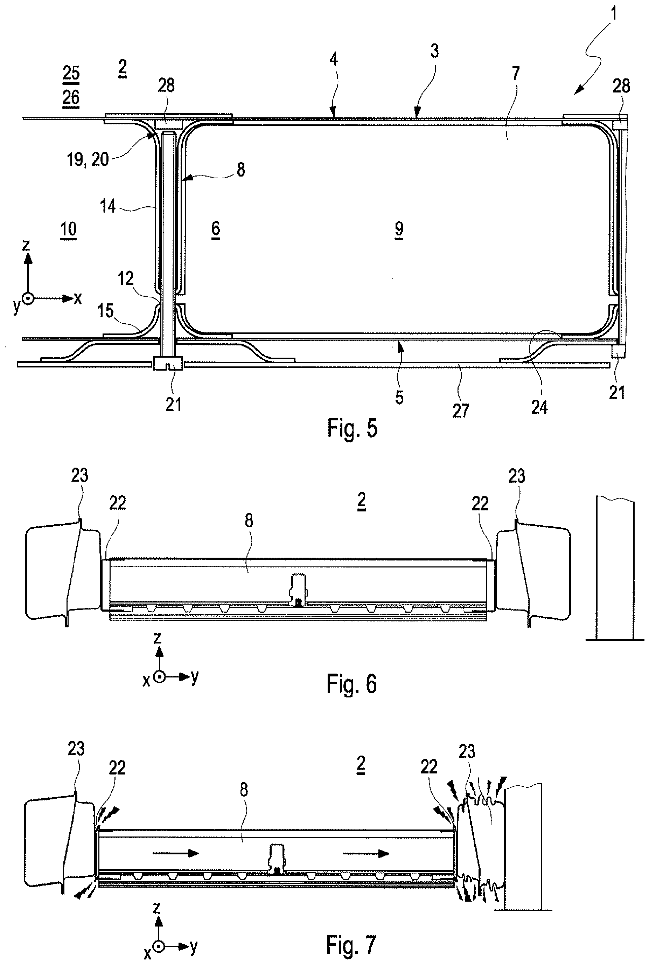

Die Fig. 5 zeigt wiederrum die Darstellung aus Fig. 2, wobei das erste Gehäuseteil 4 und das zweite Gehäuseteil 5 durch eine Haltevorrichtung 19 miteinander fixiert sind. Die Haltevorrichtung 19 kann im Bereich des Querträgers 8 angeordnet sein. Ferner kann die Haltevorrichtung 19 als eine Schraubverbindung 21 ausgebildet sein. Im Rahmen der Erfindung sind jedoch alle denkbaren Haltevorrichtungen 19, die zur Fixierung der beiden Gehäuseteile 4, 5 des Akkumulatorgehäuses 3 dienen, geschützt. Bei der beispielshaften Ausführungsform, bei der die Haltevorrichtung 19 als Schraubverbindung 20 ausgebildet ist, kann eine Schraube 21 einen derartigen Querträger 8 in Kraftfahrzeug-Z-Richtung zumindest teilweise durchdringen. Im gezeigten Beispiel kann die Schraube 21 durch das zweite Gehäuseteil 5 geschraubt werden und weiter durch den Querträger 8 mit einem am ersten Gehäuseteils 4 vorgesehenen Gewinde 28, welches an einer dem zweiten Gehäuseteil 5 zugewandten Seite am ersten Gehäuseteil 4 angeordnet ist, in Wirkverbindung gebracht werden.

Das gesamte Akkumulatorgehäuse 3 mit dem zumindest einen daran angeordneten Querträger 8 kann aus mehreren Einzelteilen gefertigt sein, die zum Teil lediglich durch Schweißpunkte oder undichte Schweißnähte miteinander verbunden sind. Diesbezüglich kann an den jeweiligen Grenzflächen ein Dichtstoff 24 vorgesehen werden. Insbesondere können das erste Gehäuseteil 4 und/oder das zweite Gehäuseteil 5 mittels des Dichtstoffes 24 abgedichtet sein. Ferner können die horizontalen Verbindungsstellen 12, also in Kraftfahrzeug-Z-Richtung, zwischen dem ersten Gehäuseteil 4 und dem zweiten Gehäuseteil 5 eine im Übrigen nicht näher gezeigte Dichtkontur 25 aufweisen. Die Dichtkontur 25 kann eine doppelte Dichtungslinie umfassen und als eine geschlossene umlaufende Ringdichtung 26 ausgebildet sein. Durch Anordnung der umlaufenden Ringdichtung 26 kann das mindestens eine Batteriemodul 7 im Inneren des Akkumulatorgehäuses 3 von äußeren Umwelteinflüssen geschützt werden.

Es kann zusätzlich zum zweiten Gehäuseteil 5 an einem Kraftfahrzeugboden ein sogenannter Kraftfahrzeugunterfahrschutz 27 angeordnet sein. Dieser Kraftfahrzeugunterfahrschutz 27 kann mit dem zweiten Gehäuseteil 5, vorausgesetzt das zweite Gehäuseteil 5 ist am Fahrzeugboden angeordnet und nicht das ersten Gehäuseteil 4, in Kontakt stehen bzw. mit diesem fest verbunden sein. Ebenso kann es sein, dass der Kraftfahrzeugunterfahrschutz 27 einteilig bzw. monolithisch, je nachdem welches der beiden Gehäuseteile 4, 5 am Fahrzeugboden ausgerichtet ist, mit dem zweiten Gehäuseteil 5 oder mit dem ersten Gehäuseteil 4 ausgebildet ist.

Die Fig. 6 und Fig. 7 zeigen jeweils Prinzipdarstellungen des erfindungsgemäßen Querträgers 8 mit beidseitig angeordneten C-förmigen Profilen 22, die jeweils an Längsträgern 23 des Kraftfahrzeuges 2 angeordnet sind in unterschiedlichen Zuständen. Die Fig. 6 zeigt den Querträger 8 in einem Montagezustand, wohingegen die Fig. 7 den Querträger 8 in einem durch eine Krafteinwirkung in Kraftfahrzeug-Y-Richtung verformten Zustand zeigt. Durch die C-förmige Ausgestaltung der Profile 22 können Torsions- und Biegekräfte an den jeweiligen Längsträger 23 übertragen werden und fertigungsbedingte Längenunterschiede von mindestens zwei erfindungsgemäßer Querträger 8 kompensiert werden. Die C-förmigen Profile 22 können derart ausgestaltet sein, dass diese bevorzugt eine geringere Festigkeit aufweisen als der mindestens eine Querträger 8 des Akkumulatorgehäuses 3 bzw. das gesamte Akkumulatorgehäuse 3 als solches. Im Falle eines seitlichen Aufpralls des Kraftfahrzeuges 2 verformen sich dahingehend zunächst die C-förmigen Profile 22, wodurch die Aufprallenergie verringert werden kann, bevor diese auf mindestens einen Querträger 8 bzw. das gesamte Akkumulatorgehäuse 3 als solches einwirkt und diesen bzw. dieses verformt.

## Patentansprüche

1. Akkumulatoranordnung (1) für ein Kraftfahrzeug (2),
- mit einem ein erstes Gehäuseteil (4) und ein zweites Gehäuseteil (5) aufweisenden Akkumulatorgehäuse (3), das einen Aufnahmeraum (6) zur Aufnahme von mindestens einem Batteriemodul (7) aufweist,
- wobei das Akkumulatorgehäuse (3) durch das erste Gehäuseteil (4) und das zweite Gehäuseteil (5) in eine Kraftfahrzeug-Z-Richtung teilbar ausgebildet ist und eins der Gehäuseteile (4, 5) zum Anordnen an einem Fahrzeugunterboden des Kraftfahrzeugs vorgesehen ist,
- wobei zumindest ein am Akkumulatorgehäuse (3) angeordneter Querträger (8) den Aufnahmeraum (6) zumindest teilweise in einen ersten Bereich (9) und einen zweiten Bereich (10) unterteilt,
- wobei das mindestens eine Batteriemodul (7) in dem ersten Bereich (9) oder dem zweiten Bereich (10) angeordnet ist,
- wobei der Querträger (8) im Bereich einer Verbindungsstelle (12) zwischen dem ersten Gehäuseteil (4) und dem zweiten Gehäuseteil (5) eine Positioniereinrichtung (13) zum vereinfachten und geführten Verbinden des ersten Gehäuseteils (4) mit dem zweiten Gehäuseteil (5) des Akkumulatorgehäuses (3) aufweist,
**dadurch gekennzeichnet,**
**dass** die Positioniereinrichtung (13) als Verzahnung (16) ausgebildet ist, wobei der Querträger (8) zumindest einseitig Zahnelemente (17) aufweist, die in dazu korrespondierende Aufnahmeelemente (18) am ersten Gehäuseteil (4) oder am zweiten Gehäuseteil (5) eingreifen.

2. Akkumulatoranordnung nach Anspruch 1,
**dadurch gekennzeichnet,**
**dass** der zumindest eine Querträger (8) teilweise integral am ersten Gehäuseteil (4) und/oder integral am zweiten Gehäuseteil (5) ausgebildet ist.

3. Akkumulatoranordnung nach Anspruch 1 oder 2,
**dadurch gekennzeichnet,**
**dass** der Querträger (8) mindestens einen Absatz (11) aufweist, an dem sich das mindestens eine Batteriemodul (7) abstützt.

4. Akkumulatoranordnung nach Anspruch 3,
**dadurch gekennzeichnet,**
- **dass** der Absatz (11) an einer dem ersten Gehäuseteil (4) oder an einer dem zweiten Gehäuseteil (5) zugewandten Seite ausgebildet ist,
- **dass** das zumindest eine Batteriemodul (7) zwischen dem ersten Gehäuseteil (4) und/oder dem zweiten Gehäuseteil (5) und dem Querträger (8) verklemmt ist.

5. Akkumulatoranordnung nach einem der Ansprüche 1 bis 4,
**dadurch gekennzeichnet,**
- **dass** der Querträger (8) aus einem ersten Querträgerteil (14) und einem zweiten Querträgerteil (15) gebildet ist und
- **dass** das erste Querträgerteil (14) am ersten Gehäuseteil (4) und das zweite Querträgerteil (15) am zweiten Gehäuseteil (5) ausgebildet sind.

6. Akkumulatoranordnung nach einem der Ansprüche 1 bis 5,
**dadurch gekennzeichnet,**
**dass** das erste Gehäuseteil (4) und das zweite Gehäuseteil (5) mittels einer Haltevorrichtung (19) im Bereich des zumindest einen Querträgers (8) miteinander fixiert sind.

7. Akkumulatoranordnung nach Anspruch 6,
**dadurch gekennzeichnet,**
**dass** die Haltevorrichtung (19) als eine Schraubverbindung (20) ausgebildet ist.

8. Akkumulatoranordnung nach Anspruch 7,
**dadurch gekennzeichnet,**
**dass** eine Schraube (21) der Schraubverbindung (20) den Querträger (8) in Z-Richtung zumindest teilweise durchdringt.

9. Akkumulatoranordnung nach einem der Ansprüche 1 bis 8,
**dadurch gekennzeichnet,**
**dass** der zumindest eine Querträger (8) an seinen jeweiligen Längsenden mittels eines C-förmigen Profils (22) im Montagezustand beidseitig mit jeweiligen Längsträgern (23) des Kraftfahrzeuges (2) in Verbindung steht.

10. Akkumulatoranordnung nach Anspruch 9,
**dadurch gekennzeichnet,**
**dass** die C-förmigen Profile (22) aus einem Material mit einer niedrigeren Festigkeit hergestellt sind als der zumindest eine Querträger (8).

11. Akkumulatoranordnung nach einem der Ansprüche 1 bis 10,
**dadurch gekennzeichnet,**
**dass** das erste Gehäuseteil (4) und/oder das zweite Gehäuseteil (5) mittels eines Dichtstoffes (24) abgedichtet sind.

12. Akkumulatoranordnung nach einem der Ansprüche 1 bis 11,
**dadurch gekennzeichnet,**
**dass** zwischen dem ersten Gehäuseteil (4) und dem zweiten Gehäuseteil (5) eine Dichtkontur (25) vorgesehen ist.

13. Akkumulatoranordnung nach Anspruch 12,
**dadurch gekennzeichnet,**
**dass** die Dichtkontur (25) eine doppelte Dichtungslinie umfasst und als eine geschlossene umlaufende Ringdichtung (26) ausgebildet ist.

14. Kraftfahrzeug (2) mit einer Akkumulatoranordnung (1) nach einem der vorherigen Ansprüche.

15. Kraftfahrzeug nach Anspruch 14,
**dadurch gekennzeichnet,**
- **dass** das erste Gehäuseteil (4) oder das zweite Gehäuseteil (5) mit einem Kraftfahrzeugunterfahrschutz (27) einteilig bzw. monolithisch ausgebildet ist; und/oder
- **dass** das erste Gehäuseteil (4) oder das zweite Gehäuseteil (5) mit einem Fahrzeugunterboden des Kraftfahrzeugs (2) einteilig bzw. monolithisch ausgebildet ist.

16. Kraftfahrzeug nach Anspruch 14 oder 15,
**dadurch gekennzeichnet,**
**dass** das mindestens eine Batteriemodul (7) unmittelbar an dem ersten Gehäuseteil (4) oder an dem zweiten Gehäuseteil (5) lösbar festgelegt ist.

## Claims

1. Battery assembly (1) for a motor vehicle (2),
- having a battery housing (3) having a first housing part (4) and a second housing part (5), which battery housing has a receiving space (6) for the reception of at least one battery module (7),
- wherein the battery housing (3) is designed so as to be able to be divided by the first housing part (4) and the second housing part (5) in a motor vehicle Z direction and one of the housing parts (4, 5) is provided for arrangement on a vehicle underfloor of the motor vehicle,
- wherein at least one crossmember (8) arranged on the battery housing (3) divides the receiving space (6) at least partially into a first region (9) and a second region (10),
- wherein the at least one battery module (7) is arranged in the first region (9) or the second region (10),
- wherein the crossmember (8) has, in the region of a connecting point (12) between the first housing part (4) and the second housing part (5), a positioning device (13) for the simplified and guided connection of the first housing part (4) with the second housing part (5) of the battery housing (3),
**characterised in**
**that** the positioning device (13) is in the form of a toothing (16), wherein the crossmember (8) has at least on one side tooth elements (17) which engage in receiving elements (18), corresponding thereto, on the first housing part (4) or on the second housing part (5).

2. Battery assembly according to claim 1,
**characterised in**
**that** the at least one crossmember (8) is partially formed integrally on the first housing part (4) and/or integrally on the second housing part (5).

3. Battery assembly according to claim 1 or 2,
**characterised in**
**that** the crossmember (8) has at least one heel (11) on which the at least one battery module (7) rests.

4. Battery assembly according to claim 3,
**characterised in**
- **that** the heel (11) is formed on a side facing the first housing part (4) or on a side facing the second housing part (5),
- **that** the at least one battery module (7) is clamped between the first housing part (4) and/or the second housing part (5) and the crossmember (8).

5. Battery assembly according to any of claims 1 to 4,
**characterised in**
- **that** the crossmember (8) is formed of a first crossmember part (14) and a second crossmember part (15) and
- **that** the first crossmember part (14) is formed on the first housing part (4) and the second crossmember (15) is formed on the second housing part (5).

6. Battery assembly according to any of claims 1 to 5,
**characterised in**
**that** the first housing part (4) and the second housing part (5) are fixed to one another by means of a holding device (19) in the region of the at least one crossmember (8).

7. Battery assembly according to claim 6,
**characterised in**
**that** the holding device (19) is in the form of a screw connection (20).

8. Battery assembly according to claim 7,
**characterised in**
**that** a screw (21) of the screw connection (20) at least partially penetrates through the crossmember (8) in Z-direction.

9. Battery assembly according to any of claims 1 to 8,
**characterised in**
**that** the at least one crossmember (8) is connected in the installation state on both sides at its respective longitudinal ends by means of a C-shaped profile (22) with respective longitudinal beams (23) of the motor vehicle (2).

10. Battery assembly according to claim 9,
**characterised in**
**that** the C-shaped profiles (22) are manufactured from a material which has a lower strength than the at least one crossmember (8).

11. Battery assembly according to any of claims 1 to 10,
**characterised in**
**that** the first housing part (4) and/or the second housing part (5) are sealed by means of a sealant (24).

12. Battery assembly according to any of claims 1 to 11,
**characterised in**
**that** a sealing contour (25) is provided between the first housing part (4) and the second housing part (5).

13. Battery assembly according to claim 12,
**characterised in**
**that** the sealing contour (25) comprises a double sealing line and is formed as a closed circumferential annular seal (26).

14. Motor vehicle (2) having a battery assembly (1) according to any of the preceding claims.

15. Battery assembly according to claim 14,
**characterised in**
- **that** the first housing part (4) or the second housing part (5) is designed as a single-part or monolithically with a motor vehicle underride protection (27); and/or
- **that** the first housing part (4) or the second housing part (5) is designed as a single-part or monolithically with a with a vehicle underfloor of the motor vehicle (2).

16. Motor vehicle according to claim 14 or 15,
**characterised in**
**that** the at least one battery module (7) is releasably fixed directly on the first housing part (4) or on the second housing part (5).

## Revendications

1. Ensemble formant accumulateur (1) destiné à un véhicule automobile (2),
- comprenant un boîtier d'accumulateur (3) présentant une première partie de boîtier (4) et une seconde partie de boîtier (5), qui présente un espace de logement (6) pour loger au moins un module de batterie (7),
- dans lequel le boîtier d'accumulateur (3) est conçu de manière à pouvoir être divisé par une première partie de boîtier (4) et une seconde partie de boîtier (5) dans une direction Z du véhicule automobile et l'une des parties de boîtier (4, 5) destinée à être disposée au niveau d'un soubassement de véhicule du véhicule automobile est prévue,
- dans lequel au moins une barre transversale (8) disposée au niveau d'un boîtier d'accumulateur (3) divise l'espace de logement (6) au moins partiellement en une première zone (9) et en une seconde zone (10),
- dans lequel l'au moins un module de batterie (7) est disposé dans la première zone (9) ou la seconde zone (10),
- dans lequel la barre transversale (8) présente dans la zone d'un point de jonction (12) entre la première partie de boîtier (4) et la seconde partie de boîtier (5) un dispositif de positionnement (13) pour relier de manière simplifiée et guidée la première partie de boîtier (4) à la seconde partie de boîtier (5) du boîtier d'accumulateur (3),
**caractérisé en ce que**
le dispositif de positionnement (13) est conçu en tant qu'engrenage (16), dans lequel la barre transversale (8) présente au moins des éléments d'encliquetage (17) unilatéraux, qui entrent en prise dans les éléments de logement (18) correspondants au niveau de la première partie de boîtier (4) ou au niveau de la seconde partie de boîtier (5).

2. Ensemble formant accumulateur selon la revendication 1,
**caractérisé en ce**
**que** l'au moins une barre transversale (8) est conçue partiellement d'un seul tenant au niveau de la première partie de boîtier (4) et/ou d'un seul tenant au niveau de la seconde partie de boîtier (5).

3. Ensemble formant accumulateur selon la revendication 1 ou 2,
**caractérisé en ce**
**que** la barre transversale (8) présente au moins un épaulement (11), au niveau duquel l'au moins un module de batterie (7) prend appui.

4. Ensemble formant accumulateur selon la revendication 3,
**caractérisé en ce**
- **que** l'épaulement (11) est conçu au niveau d'un des côtés tourné vers la première partie de boîtier (4) ou au niveau d'un des côtés tourné vers la seconde partie de boîtier (5),
- **que** l'au moins un module de batterie (7) est coincé entre la première partie de boîtier (4) et/ou la seconde partie de boîtier (5) et la barre transversale (8).

5. Ensemble formant accumulateur selon l'une quelconque des revendications 1 à 4, **caractérisé en ce**
- **que** la barre transversale (8) est formée à partir d'une première partie de barre transversale (14) et d'une seconde partie de barre transversale (15) et
- **que** la première partie de barre transversale (14) est conçue au niveau de la première partie de boîtier (4) et la seconde partie de barre transversale (15) est conçue au niveau de la seconde partie de boîtier (5).

6. Ensemble formant accumulateur selon l'une quelconque des revendications 1 à 5, **caractérisé en ce**
**que** la première partie de boîtier (4) et la seconde partie de boîtier (5) sont fixés l'une à l'autre au moyen d'un support (19) dans la zone de l'au moins une barre transversale (8).

7. Ensemble formant accumulateur selon la revendication 6,
**caractérisé en ce**
**que** le support (19) est conçu en tant qu'assemblage vissé (20).

8. Ensemble formant accumulateur selon la revendication 7,
**caractérisé en ce**
**qu'**une vis (21) de l'assemblage vissé (20) traverse au moins partiellement la barre transversale (8) dans la direction Z.

9. Ensemble formant accumulateur selon l'une quelconque des revendications 1 à 8, **caractérisé en ce**
**que** l'au moins une barre transversale (8) est en communication bilatérale au niveau de ses extrémités longitudinales respectives au moyen d'un profil en forme de C (22) à l'état monté avec les supports longitudinaux (23) respectifs du véhicule automobile (2).

10. Ensemble formant accumulateur selon la revendication 9,
**caractérisé en ce**
**que** les profils en forme de C (22) sont fabriqués comme l'au moins une barre transversale (8) à partir d'un matériau présentant une résistance inférieure.

11. Ensemble formant accumulateur selon l'une quelconque des revendications 1 à 10, **caractérisé en ce**
**que** la première partie de boîtier (4) et/ou la seconde partie de boîtier (5) sont scellées au moyen d'un produit d'étanchéité (24).

12. Ensemble formant accumulateur selon l'une quelconque des revendications 1 à 11, **caractérisé en ce**
**qu'**un contour d'étanchéité (25) est prévu entre la première partie de boîtier (4) et la seconde partie de boîtier (5).

13. Ensemble formant accumulateur selon la revendication 12,
**caractérisé en ce**
**que** le contour d'étanchéité (25) comporte une double ligne d'étanchéité et est conçue en tant que bague d'étanchéité (26) circulaire fermée.

14. Véhicule automobile (2) comprenant un ensemble formant accumulateur (1) selon l'une quelconque des revendications précédentes.

15. Véhicule automobile selon la revendication 14,
**caractérisé en ce**
- **que** la première partie de boîtier (4) ou la seconde partie de boîtier (5) est conçue d'une seule pièce ou de manière monolithique avec une protection anti-encastrement de véhicule automobile (27) ; et/ou
- **que** la première partie de boîtier (4) ou la seconde partie de boîtier (5) est conçue d'une seule pièce ou de manière monolithique avec un soubassement de véhicule du véhicule automobile (2).

16. Véhicule automobile selon la revendication 14 ou 15,
**caractérisé en ce**
**que** l'au moins un module de batterie (7) est fixé de manière amovible directement au niveau de la première partie de boîtier (4) ou au niveau de la seconde partie de boîtier (5).
